# FASCICULE DE BREVET EUROPEEN

(11) **EP 1 447 585 B1**
(45) Date de publication et mention de la délivrance du brevet: **17.10.2007**
(21) Numéro de dépôt: 04003369.8
(22) Date de dépôt: 16.02.2004
(51) Int. Cl.: F16D 65/097

(54) **Organe de friction et frein à disque pour véhicule automobile muni de cet organe de friction**
Reibelement sowie hiermit versehene Scheibenbremse für Kraftfahrzeuge
Friction element and disc brake for motor vehicles provided therewith

(30) Priorité: 17.02.2003 FR 0301973
(43) Date de publication de la demande: 18.08.2004
(73) Titulaire: ROBERT BOSCH GMBH, 70442 Stuttgart (DE)
(72) Inventeur: Prades, Xavier, 49125 Tierce (FR); Plessis, David, 49480 Saint Sylvain D'Anjou (FR); Audinay, Daniel, 49000 Angers (FR); Bonnec, Jean-Louis, 49130 Les Ponts de Ce (FR); Vinck, Jan, 49250 Beaufort en Vallee (DE)
(74) Mandataire: Hurwic, Aleksander Wiktor

(56) Documents cités:
- DE-A- 3 333 670
- DE-A- 19 650 592
- FR-A- 2 171 562
- US-A- 4 098 951
- US-A- 5 649 610
- PATENT ABSTRACTS OF JAPAN vol. 2000, no. 25, 12 avril 2001 (2001-04-12) -& JP 2001 234955 A (AISIN SEIKI CO LTD), 31 août 2001 (2001-08-31)

## Description

La présente invention concerne un organe de friction et un frein à disque pour véhicule automobile muni de cet organe de friction.

On connaît déjà dans l'état de la technique, notamment d'après US 6 223 866, un organe de friction pour frein à disque de véhicule automobile, du type ayant une forme générale de secteur de couronne et comportant deux extrémités, dites oreilles, destinées à être montées coulissantes sur un support fixe du frein, dit chape, sensiblement parallèlement à l'axe du disque.

L'organe de friction est encore appelé "plaquette de frein".

Chaque oreille de l'organe de friction décrit dans US 6 223 866 est montée coulissante, sensiblement parallèlement à l'axe du disque, dans une pince-ressort de guidage accrochée sur la chape. Le cas échéant, une masse de matériau amortissant est intercalée entre la pince-ressort et la chape. L'organe de friction est donc mobile par rapport à la pince ressort et à la masse de matériau amortissant. L'ensemble comprenant la pince-ressort et le matériau amortissant peut être formé par pliage et découpage d'une tôle revêtue du matériau amortissant. On notera toutefois que la pince-ressort a une dimension parallèle au déplacement de l'organe de friction au moins égale à l'amplitude maximale de ce déplacement et que la forme de la pince-ressort peut être relativement complexe.

Lors du freinage du véhicule équipé d'un frein à disque muni d'un organe de friction du type précité, cet organe de friction subi un effort tangentiel entraînant une de ses oreilles en butée contre la pince-ressort correspondante et la partie de la chape portant cette pince-ressort. Cette mise en butée peut être dans certains cas relativement brutale et engendrer un bruit indésirable.

L'invention a pour but d'éviter l'apparition du bruit indésirable lors de la venue en butée d'une oreille de l'organe de friction contre la pince-ressort correspondante, ceci avec des moyens simples, de masse aussi faible que possible (pour limiter le poids des masses non suspendues du véhicule), ne gênant pas le guidage de l'organe de friction dans la chape.

Du document JP 2001234955 on connaît également un organe de freinage équipé d'un capuchon amortisseur de bruit. L'invention a aussi pour but d'améliorer l'amortissement de ce capuchon connu.

A cet effet, l'invention a pour objet un organe de friction pour frein à disque de véhicule automobile, du type précité, comprennant un capuchon, rapporté sur une oreille correspondante, et des moyens d'amortissement intercalés entre le capuchon et l'oreille correspondante selon la partie caractérisante de la revendication 1.

Grâce aux moyens d'amortissement intercalés entre le capuchon et l'oreille correspondante on évite efficacement le bruit indésirable lors de la venue en butée d'une oreille de l'organe de friction contre la chape. Par ailleurs, le capuchon permet de conserver l'efficacité du guidage de l'organe de friction, sensiblement parallèlement à l'axe du disque, dans la chape, ceci en formant notamment un support et une protection pour les moyens d'amortissement. Les dimensions du capuchon, imposées par l'oreille qui le porte, sont relativement réduites.

Selon l'invention, l'oreille portant le capuchon forme une saillie d'extrémité de l'organe de friction ayant une forme générale prismatique aplatie, le capuchon comportant une âme, recouvrant le chant de l'oreille, prolongée latéralement par deux ailes sensiblement parallèles de pincement de l'oreille et longitudinalement par deux pattes sensiblement parallèles de recouvrement de chant et l'âme du capuchon comporte une semi-découpe formant ressort à effet élastique sensiblement tangentiel après montage de l'organe de friction dans la chape.

Ainsi, le capuchon forme des surfaces de contact avec la partie complémentaire de la chape qui guide ce capuchon tout en protégeant les moyens d'amortissement contre l'usure.

De préférence ,
une patte de recouvrement de chant, dite patte élastique, comporte un pli formant ressort à effet élastique sensiblement radial après montage de l'organe de friction dans la chape.

Ainsi, la pince-ressort de l'état de la technique, portée par la chape, peut être éventuellement supprimée, les fonctions de rappel élastique qu'elle assure habituellement étant transférées sur le capuchon.

Suivant d'autres caractéristiques optionnelles de différents modes de réalisation de l'organe de friction :
- la semi-découpe formant ressort fait saillie par rapport à l'âme à l'opposé de l'oreille de façon que son extrémité libre prenne appui sur la chape ;
- la semi-découpe formant ressort fait saillie par rapport à l'âme vers le chant de l'oreille de façon que son extrémité libre prenne appui sur l'oreille ;
- au moins une patte de recouvrement de chant comporte une extrémité libre pliée de façon à former une languette de fixation emboîtée dans une encoche de fixation complémentaire ménagée sur l'oreille correspondante ;
- au moins une aile de pincement comporte une semi-découpe formant une languette de fixation emboîtée dans une encoche de fixation complémentaire ménagée sur l'oreille correspondante ;
- le capuchon forme un support pour les moyens d'amortissement ;
- les moyens d'amortissement comportent une masse de caoutchouc synthétique ou naturel ;
- la masse de caoutchouc adhère sur le capuchon, ce dernier étant de préférence en tôle métallique pliée ;
- l'organe de friction comprend une embase, en forme générale de secteur de couronne, portant une garniture de friction, cette embase comportant deux extrémités formant les oreilles.

L'invention a également pour objet un frein à disque pour véhicule automobile, du type comprenant un support fixe, dit chape, **caractérisé en ce qu'**il comprend un organe de friction tel que défini ci-dessus, les oreilles de l'organe de friction étant montées coulissantes sur la chape, sensiblement parallèlement à l'axe du disque, si bien que le capuchon et les moyens d'amortissement sont solidaires des déplacements de l'organe de friction.

Suivant une autre caractéristique optionnelle de ce frein à disque, au moins l'oreille portant le capuchon est montée coulissante, sensiblement parallèlement à l'axe du disque, dans une pince-ressort de guidage accrochée sur la chape de manière que ce capuchon délimite des surfaces de contact de l'organe de friction avec cette pince-ressort.

L'invention sera mieux comprise à la lecture de la description qui va suivre, donnée uniquement à titre d'exemple et faite en se référant aux dessins annexés dans lesquels :
- les figures 1 et 2 sont des vues partielles d'un organe de friction selon respectivement des premier et deuxième modes de réalisation de l'invention montrant chacune une oreille de cet organe ;
- Les figures 3 et 4 sont des vues d'un capuchon de l'organe de friction, pourtant sans la semi-découpe formant ressort selon l'invention ;
- la figure 5 est une vue analogue aux figures 1 à 3 montrant un organe de friction équipé d'un autre capuchon, également sans semi-découpe ;
- la figure 6 est une vue en perspective du capuchon de la figure 5.

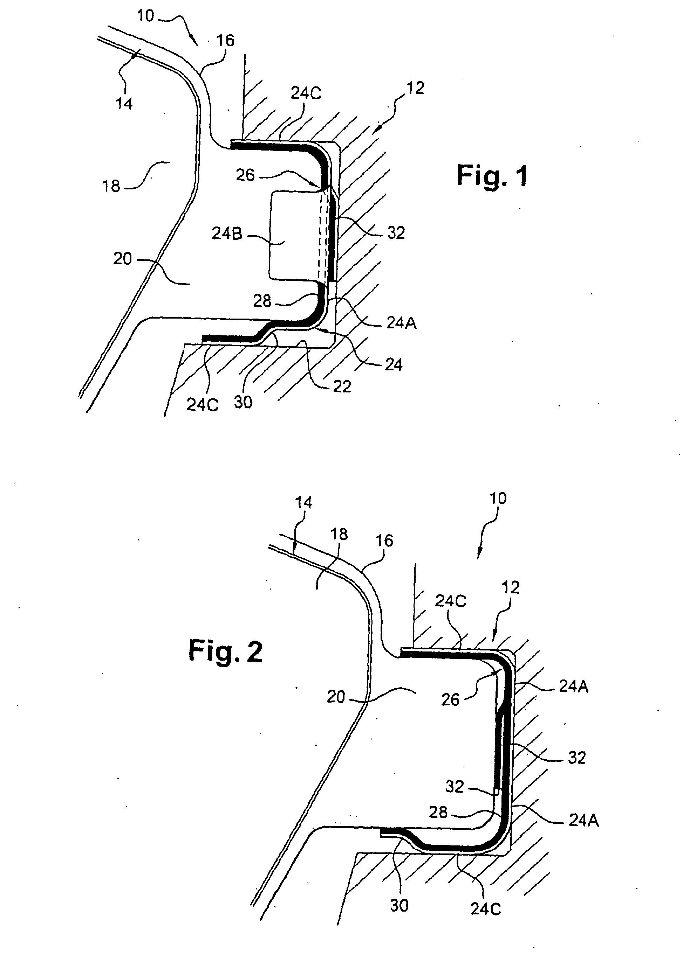

On a représenté sur la figure 1 un frein à disque pour véhicule automobile, selon un premier mode de réalisation de l'invention. Ce frein est désigné par la référence générale 10.

Le frein 10 comprend un support fixe 12, dit chape, solidaire d'un porte-moyeu non représenté. La chape 12 porte deux organes de friction 14, dont un seul est représenté, munis chacun d'une embase 16 et d'une garniture de friction 18.

De façon classique, les deux organes de friction 14 sont destinés à coopérer par frottement avec deux faces respectives du disque (non représenté sur les figures).

Dans ce qui suit, les orientations radiale et tangentielle d'un élément seront considérées par rapport à l'axe du disque.

Les organes de friction 14 sont montés coulissants sur la chape 12, sensiblement parallèlement à l'axe du disque.

Dans les différents modes de réalisation de l'invention, les deux organes de friction 14 sont sensiblement identiques si bien que, dans ce qui suit, on ne décrira que l'organe de friction 14 représenté.

De façon classique, l'organe de friction 14, et plus particulièrement l'embase 16 de cet organe 14, ont une forme générale de secteur de couronne.

L'embase 16 comporte deux extrémités, dites oreilles 20, dont une seule est représentée sur la figure 1. Chaque oreille 20 forme une saillie d'extrémité de l'organe de friction 14 ayant une forme générale prismatique aplatie de façon à présenter des grandes faces sensiblement parallèles aux faces du disque du frein.

Les oreilles 20 sont montées coulissantes sur la chape 12, plus particulièrement dans des gorges 22 de cette chape. Ces gorges 22 guident les oreilles 20 sensiblement parallèlement à l'axe du disque.

L'organe de friction 14 comporte également un capuchon 24 rapporté sur chaque oreille 20.

Des moyens d'amortissement 26 sont intercalés entre le capuchon 24 et l'oreille 20 portant ce capuchon. Ces moyens d'amortissement 26 sont destinés à amortir le choc créé par la mise en butée brutale de l'oreille 20 contre le fond de la gorge 22 de la chape lorsque l'organe de friction 14 subit un effort tangentiel résultant d'une opération de freinage conduisant à une décélération très rapide du véhicule.

De préférence, les moyens d'amortissement 26 comprennent une masse 28 de caoutchouc synthétique ou naturel. De préférence également, les moyens d'amortissement 26 sont portés par le capuchon 24, la masse de caoutchouc adhérant par exemple sur la face du capuchon 24 appliquée contre l'oreille 20.

Le capuchon 24 est formé, par exemple, par pliage et découpage d'une tôle métallique qui est revêtue, le cas échéant, de la masse de caoutchouc.

Le capuchon 24 comporte une âme 24A recouvrant le chant de l'oreille 20. Cette âme 24A est prolongée latéralement par deux ailes 24B sensiblement parallèles coopérant par pincement avec les grandes faces de l'oreille 20 (une seule aile 24B est visible sur la figure 1). L'âme 24A est prolongée longitudinalement par deux pattes 24C sensiblement parallèles, recouvrant le chant de l'oreille 20.

Une des pattes 24C, dite patte de chant élastique, comporte un pli 30 formant ressort à effet élastique sensiblement radial lorsque l'on considère l'oreille 20 emboîtée dans la gorge 22 de la chape. On notera que la patte de chant élastique 24C et, en considérant la figure 1, la patte inférieure, c'est-à-dire la patte 24C du capuchon la plus proche de l'axe du disque.

Par ailleurs, l'âme 24A du capuchon comporte une semi-découpe 32 formant ressort à effet élastique sensiblement tangentiel lorsque l'on considère l'oreille 20 emboîtée dans la gorge 22 de la chape.

Ainsi, le capuchon 24 permet de s'affranchir de la pince-ressort de l'état de la technique (fixée habituellement sur la chape) du fait que la patte de chant élastique 24C et la semi-découpe 32 assurent les fonctions de rappel élastique habituellement affectées à une pince-ressort telle que décrite dans US 6 223 866 ou FR 2 800 140.

On notera que, dans le premier mode de réalisation de l'invention, la semi-découpe 32 fait saillie, par rapport à l'âme 24A, à l'opposé de l'oreille 20, de façon que l'extrémité libre de cette semi-découpe 32 prenne appui sur le fond de la gorge 22 de la chape 12.

Les deux capuchons 24 de l'organe de friction 14, accrochés sur les deux oreilles 20 de cet organe 14, ainsi que les moyens d'amortissement 26 intercalés entre les capuchons 24 et les oreilles 20 correspondantes sont solidaires des déplacements de l'organe de friction 14 sensiblement parallèlement à l'axe du disque.

Dans le deuxième mode de réalisation de l'invention représenté sur la figure 2, la semi-découpe 32 formant ressort fait saillie, par rapport à l'âme 24A, vers le chant de l'oreille 20, de façon que l'extrémité libre de cette semi-découpe 32 prenne appui sur le chant de cette oreille.

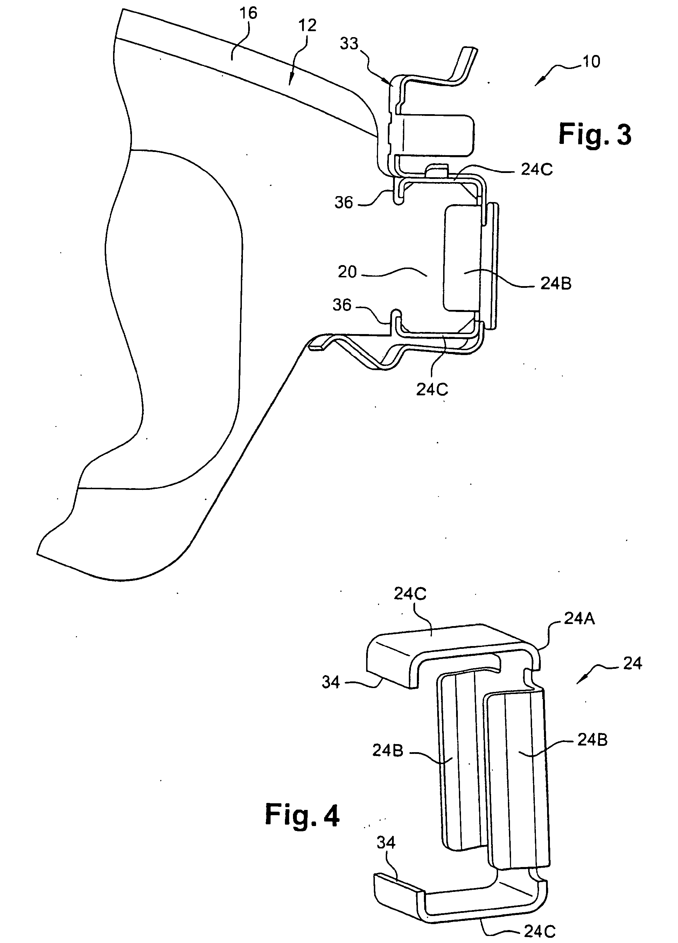

Sur les figures 3 à 6, on a représenté un organe de friction d'un frein à disque avec capuchon sans semi-découpe formant ressort. Sur ces figures, les éléments analogues à ceux de la figure 1 sont désignés par des références identiques.

Dans les organes de friction représentés sur les figures 3 à 6, le capuchon 24 est fabriqué par exemple, comme dans les deux modes de réalisation de l'invention, par découpage et pliage d'une tôle métallique revêtue d'une masse de caoutchouc formant des moyens d'amortissement. Pour des raisons de clarté, cette masse de caoutchouc n'est pas représentée sur les figures 3 à 6.

Par ailleurs, dans les organes de friction selon les figures 3 à 6, chaque oreille 20 et le capuchon 24 qu'elle porte sont montés coulissants dans une pince-ressort classique 33, portée par la chape 12. Une pince-ressort classique 33 est décrite par exemple dans FR 2 800 140. Les capuchons 24 portés par l'organe de friction 14 délimitent des surfaces de contact de cet organe de friction 14 avec les pinces-ressorts 33.

Les capuchons 24 selon les figures 3 à 6 ont une structure relativement simple et permettent de conserver l'efficacité du guidage de l'organe de friction 14 dans les pinces-ressorts 33 portées par la chape 12.

Dans l'organe de friction représenté sur les figures 3 et 4, les pattes 24C de recouvrement de chant comportent chacune une extrémité libre pliée de façon à former une languette de fixation 34 emboîtée dans une encoche complémentaire de fixation 36 ménagée dans l'oreille 20.

Les languettes de fixation 34 permettent ainsi un accrochage simple du capuchon 24 sur l'oreille correspondante 20, par encliquetage.

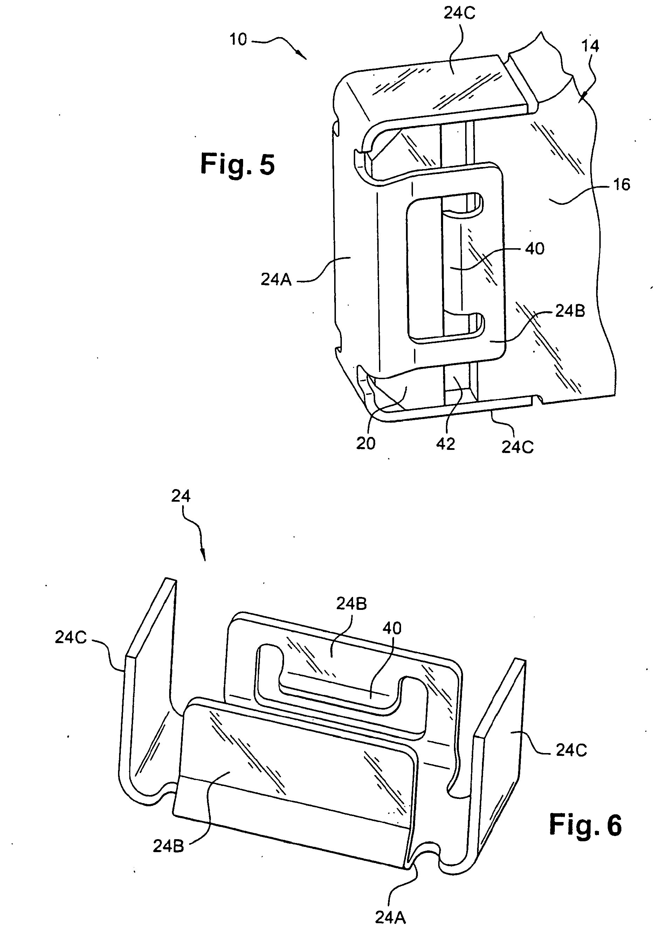

Dans l'organe de friction représenté sur les figures 5 et 6, les extrémités libres des pattes de recouvrement 24C du capuchon sont dépourvues de languettes de fixation 34. Par contre, au moins une aile de pincement 24B comporte une semi-découpe 40 repliée de façon à former une languette de fixation emboîtée dans une encoche de fixation 42 complémentaire ménagée sur l'oreille 20.

La languette de fixation 40 permet ainsi un accrochage simple du capuchon 24 sur l'oreille correspondante 20, par encliquetage.

Le capuchon selon la présente invention est formé avantageusement par pliage de tôle métallique, des moyens d'amortissement par exemple en caoutchouc naturel ou synthétique sont avantageusement collés ou adhérisés à l'intérieur du capuchon de manière à être en contact avec une oreille de l'organe de friction.

Le capuchon est maintenu sur l'oreille par des moyens mécaniques par élasticité, par exemple par pincement et/ou encliquetage.

L'invention ne se limite pas aux modes de réalisation décrits ci-dessus. En particulier, les deux oreilles 20 d'un même organe de friction 14 peuvent être équipées de capuchons 24 selon deux modes de réalisation différents.

## Revendications

1. Organe de friction (14) pour frein à disque de véhicule automobile, du type ayant une forme générale de secteur de couronne et comportant deux extrémités, dites oreilles (20), destinées à être montées coulissantes sur un support fixe du frein, dit chape (12), sensiblement parallèlement à l'axe du disque, un capuchon (24), rapporté sur une oreille (20) correspondante, **caractérisé en ce qu**'il comporte des moyens d'amortissement (26) intercalés entre le capuchon (24) et l'oreille (20) correspondante, lesdits moyens d'amortissement (26) étant réalisés en caoutchouc et en ce que le capuchon (24) est maintenu sur l'oreille (20) par des moyens mécaniques (24B, 24C) par élasticité, en ce que l'oreille (20) portant le capuchon (24) forme une saillie d'extrémité de l'organe de friction (14) ayant une forme générale prismatique aplatie, le capuchon (24) comportant une âme (24A), recouvrant le chant de l'oreille (20), prolongée latéralement par deux ailes (24B) sensiblement parallèles de pincement de l'oreille (20) et longitudinalement par deux pattes (24C) sensiblement parallèles de recouvrement de chant, et en ce que l'âme du capuchon (24) comporte une semi-découpe (32) formant ressort à effet élastique sensiblement tangentiel après montage de l'organe de friction (14) dans la chape (12).

2. Organe de friction (14) selon la revendication 1, **caractérisé en ce qu**'une patte (24C) de recouvrement de chant, dite patte de chant élastique, comporte un pli (30) formant ressort à effet élastique sensiblement radial après montage de l'organe de friction (14) dans la chape (12).

3. Organe de friction (14) selon la revendication 1 ou 2, **caractérisé en ce que** la semi-découpe formant ressort (32) fait saillie par rapport à l'âme (24A) à l'opposé de l'oreille (20) de façon que son extrémité libre prenne appui sur la chape (12).

4. Organe de friction (14) selon la revendication 1 ou 2, **caractérisé en ce que** la semi-découpe formant ressort (32) fait saillie par rapport à l'âme (24A) vers le chant de l'oreille (20) de façon que son extrémité libre prenne appui sur l'oreille (20).

5. Organe de friction (14) selon l'une quelconque des revendications précédentes, **caractérisé en ce qu**'au moins une patte de recouvrement de chant (24C) comporte une extrémité libre pliée de façon à former une languette (34) de fixation emboîtée dans une encoche de fixation complémentaire (36) ménagée sur l'oreille (20) correspondante.

6. Organe de friction (14) selon l'une quelconque des revendications précédentes, **caractérisé en ce qu**'au moins une aile de pincement (24B) comporte une semi-découpe (40) formant une languette de fixation emboîtée dans une encoche de fixation complémentaire (42) ménagée sur l'oreille (20) correspondante.

7. Organe de friction (14) selon l'une quelconque des revendications précédentes, **caractérisé en ce que** le capuchon (24) forme un support pour les moyens d'amortissement (26).

8. Organe de friction (14) selon l'une quelconque des revendications précédentes, **caractérisé en ce que** les moyens d'amortissement (26) comportent une masse (28) de caoutchouc synthétique ou naturel.

9. Organe de friction (14) selon les revendications 7 et 8 prises ensembles, **caractérisé en ce que** la masse de caoutchouc (28) adhère sur le capuchon (24), ce dernier étant de préférence en tôle métallique pliée.

10. Organe de friction (14) selon l'une quelconque des revendications précédentes, **caractérisé en ce qu**'il comprend une embase (16), en forme générale de secteur de couronne, portant une garniture de friction (18), cette embase (16) comportant deux extrémités formant les oreilles (20).

11. Frein à disque pour véhicule automobile, du type comprenant un support fixe, dit chape (12), **caractérisé en ce qu**'il comprend un organe de friction (14) selon l'une quelconque des revendications précédentes, les oreilles (20) de l'organe de friction (14) étant montées coulissantes sur la chape (12), sensiblement parallèlement à l'axe du disque, si bien que le capuchon (24) et les moyens d'amortissement (26) sont solidaires des déplacements de l'organe de friction (14).

12. Frein à disque selon la revendication 11, **caractérisé en ce qu**'au moins l'oreille (20) portant le capuchon (24) est montée coulissante, sensiblement parallèlement à l'axe du disque, dans une pince-ressort de guidage (33) accrochée sur la chape (12) de manière que ce capuchon (24) délimite des surfaces de contact de l'organe de friction (14) avec cette pince-ressort (33).

## Claims

1. Friction member (14) for a motor vehicle disc brake, of the type having the general shape of a ring sector and comprising two ends, called ears (20), intended to be slidably mounted on a fixed support of the brake, called a carrier (12), substantially parallel to the axis of the disc, and a cap (24) fitted on a corresponding ear (20), **characterized in that** the friction member comprises damping means (26) interposed between the cap (24) and the corresponding ear (20), the said damping means (26) being made of rubber, and **in that** the cap (24) is maintained on the ear (20) by mechanical means (24B, 24C) by elasticity, **in that** the ear (20) bearing the cap (24) forms an end projection of the friction member (14) that has a flattened prismatic general shape, the cap (24) comprising a web (24A) which covers the edge of the ear (20) and is extended laterally by two substantially parallel wings (24B) for clamping the ear (20) and longitudinally by two substantially parallel edge-covering lugs (24C), and **in that** the web of the cap (24) comprises a semi-cutaway portion (32) forming a spring with a substantially tangential elastic effect after mounting the friction member (14) in the carrier (12).

2. Friction member (14) according to Claim 1, **characterized in that** an edge-covering lug (24C), called an elastic edge lug, comprises a fold (30) forming a spring with a substantially radial elastic effect after mounting the friction member (14) in the carrier (12).

3. Friction member (14) according to Claim 1 or 2, **characterized in that** the spring-forming semi-cutaway portion (32) projects with respect to the web (24A) on the opposite side to the ear (20) such that its free end bears against the carrier (12).

4. Friction member (14) according to Claim 1 or 2, **characterized in that** the spring-forming semi-cutaway portion (32) projects with respect to the web (24A) towards the edge of the ear (20) such that its free end bears against the ear (20).

5. Friction member (14) according to any one of the preceding claims, **characterized in that** at least one ear-covering lug (24C) comprises a free end folded so as to form a fastening tongue (34) fitted into a complementary fastening notch (36) provided on the corresponding ear (20).

6. Friction member (14) according to any one of the preceding claims, **characterized in that** at least one clamping wing (24B) comprises a semi-cutaway portion (40) forming a fastening tongue fitted into a complementary fastening notch (42) provided on the corresponding ear (20).

7. Friction member (14) according to any one of the preceding claims, **characterized in that** the cap (24) forms a support for the damping means (26).

8. Friction member (14) according to any one of the preceding claims, **characterized in that** the damping means (26) comprise a block (28) of synthetic or natural rubber.

9. Friction member (14) according to Claims 7 and 8 taken together, **characterized in that** the rubber block (28) adheres to the cap (24), the latter preferably being made of folded metal sheet.

10. Friction member (14) according to any one of the preceding claims, **characterized in that** it comprises a base (16), having the general shape of a ring sector, bearing a friction lining (18), this base (16) comprising two ends forming the ears (20).

11. Motor vehicle disc brake of the type comprising a fixed support, called a carrier (12), **characterized in that** it comprises a friction member (14) according to any one of the preceding claims, the ears (20) of the friction member (14) being slidably mounted on the carrier (12), substantially parallel to the axis of the disc, such that the cap (24) and the damping means (26) are coupled with the movements of the friction member (14).

12. Disc brake according to Claim 11, **characterized in that** at least the ear (20) bearing the cap (24) is slidably mounted, substantially parallel to the axis of the disc, in a spring guide clip (33) attached to the carrier (12) in such a way that this cap (24) defines contact surfaces between the friction member (14) and this spring clip (33).

## Patentansprüche

1. Reiborgan (14) für eine Kraftfahrzeugscheibenbremse, vom Typ mit einer allgemeinen Form eines Kranzabschnitts und zwei Enden, die Ohren (20) genannt werden und dazu vorgesehen sind, im Wesentlich parallel zur Achse der Scheibe an einem feststehenden Träger der Bremse, der Halter (12) genannt wird, gleitend angebracht zu sein, einer Kappe (24), die an ein entsprechendes Ohr (20) angesetzt ist, **dadurch gekennzeichnet, dass** es Dämpfungsmittel (26) aufweist, die zwischen der Kappe (24) und dem entsprechenden Ohr (20) angeordnet sind, wobei die Dämpfungsmittel (26) aus Kautschuk hergestellt sind, und dass die Kappe (24) mittels mechanischer Mittel (24B, 24C) durch Elastizität am Ohr (20) gehalten sind, dass das die Kappe (24) tragende Ohr (20) einen Endvorsprung des Reiborgans (14) mit einer allgemeinen Form eines abgeflachten Prismas bildet, wobei die Kappe (24) einen Steg (24A) aufweist, der die Kante des Ohrs (20) bedeckt und der seitlich durch zwei im Wesentlichen parallele Flügel (24B) zum Klemmen des Ohrs (20) und der Länge durch zwei im Wesentlichen parallele Laschen (24C) zur Kantenabdeckung verlängert ist, und dass der Steg der Kappe (24) einen Halbausschnitt (32) aufweist, der nach dem Anbringen des Reiborgans (14) im Halter (12) eine Feder mit im Wesentlichen tangentialer elastischer Wirkung bildet.

2. Reiborgan (14) nach Anspruch 1, **dadurch gekennzeichnet, dass** eine Lasche (24C) zur Kantenabdeckung, die elastische Kantenlasche genannt wird, eine Biegung (30) aufweist, die nach dem Anbringen des Reiborgans (14) im Halter (12) eine Feder mit im Wesentlichen radialer elastischer Wirkung bildet.

3. Reiborgan (14) nach Anspruch 1 oder 2, **dadurch gekennzeichnet, dass** der federbildende Halbausschnitt (32) bezüglich des Stegs (24A) entgegengesetzt zum Ohr (20) so hervorsteht, dass sein freies Ende am Halter (12) anliegt.

4. Reiborgan (14) nach Anspruch 1 oder 2, **dadurch gekennzeichnet, dass** der federbildende Halbausschnitt (32) bezüglich des Stegs (24A) zur Kante des Ohrs (20) so hervorsteht, dass sein freies Ende am Ohr (20) anliegt.

5. Reiborgan (14) nach einem der vorhergehenden Ansprüche, **dadurch gekennzeichnet, dass** mindestens eine Lasche (24C) zur Kantenabdeckung ein freies Ende aufweist, das so umgebogen ist, dass eine Befestigungszunge (34) gebildet ist, die in eine komplementäre Befestigungseinkerbung (36) eingesetzt ist, welche am entsprechenden Ohr (20) ausgebildet ist.

6. Reiborgan (14) nach einem der vorhergehenden Ansprüche, **dadurch gekennzeichnet, dass** mindestens ein Klemmflügel (24B) einen Halbausschnitt (40) aufweist, der eine Befestigungszunge bildet, die in eine komplementäre Befestigungseinkerbung (42) eingesetzt ist, welche am entsprechenden Ohr (20) ausgebildet ist.

7. Reiborgan (14) nach einem der vorhergehenden Ansprüche, **dadurch gekennzeichnet, dass** die Kappe (24) einen Träger für die Dämpfungsmittel (26) bildet.

8. Reiborgan (14) nach einem der vorhergehenden Ansprüche, **dadurch gekennzeichnet, dass** die Dämpfungsmittel (26) eine synthetische oder natürliche Kautschukmasse (28) aufweisen.

9. Reiborgan (14) nach den Ansprüchen 7 und 8 in Kombination, **dadurch gekennzeichnet, dass** die Kautschukmasse (28) an der Kappe (24) haftet, wobei diese vorzugsweise aus einem gebogenen Metallblech besteht.

10. Reiborgan (14) nach einem der vorhergehenden Ansprüche, **dadurch gekennzeichnet, dass** es einen Basisteil (16) aufweist, der die allgemeine Form eines Kranzabschnitts hat und einen Reibbelag (18) trägt, wobei dieser Basisteil (16) zwei Enden aufweist, die die Ohren (20) bilden.

11. Scheibenbremse für ein Kraftfahrzeug, vom Typ mit einem feststehenden Träger, der Halter (12) genannt wird, **dadurch gekennzeichnet, dass** sie ein Reiborgan (14) nach einem der vorhergehenden Ansprüche aufweist, wobei die Ohren (20) des Reiborgans (14) im Wesentlichen parallel zur Achse der Scheibe gleitend am Halter (12) angebracht sind, so dass die Kappe (24) und die Dämpfungsmittel (26) mit den Verlagerungen des Reiborgans (14) verbunden sind.

12. Scheibenbremse nach Anspruch 11, **dadurch gekennzeichnet, dass** zumindest das die Kappe (24) tragende Ohr (20) im Wesentlichen parallel zur Achse der Scheibe in einer Fürhungsfederklemme (33) gleitend angebracht ist, die am Halter (12) befestigt ist, so dass diese Kappe (24) Kontaktflächen zwischen dem Reiborgan (14) und dieser Federklemme (33) begrenzt.
